(19) Europäisches Patentamt

European Patent Office

Office européen des brevets

(11) Veröffentlichungsnummer: **0 308 598 B1**

# (12) EUROPÄISCHE PATENTSCHRIFT

(45) Veröffentlichungstag der Patentschrift: **22.07.92**

(51) Int. Cl.5: **F16C 23/04**, H02K 5/167

(21) Anmeldenummer: **88111085.2**

(22) Anmeldetag: **12.07.88**

(54) **Klemmbrille zur Halterung von Pendelgleitlagern.**

(30) Priorität: **25.09.87 DE 8712958 U**

(43) Veröffentlichungstag der Anmeldung:
**29.03.89 Patentblatt 89/13**

(45) Bekanntmachung des Hinweises auf die
Patenterteilung:
**22.07.92 Patentblatt 92/30**

(84) Benannte Vertragsstaaten:
**CH DE ES FR GB IT LI**

(56) Entgegenhaltungen:
DE-U- 8 419 027      FR-A- 1 591 659
US-A- 2 922 682      US-A- 3 191 977
US-A- 3 624 434      US-A- 3 770 990

(73) Patentinhaber: **ING. LANG & MENKE GMBH
Altenaer Strasse 3
W-5870 Hemer-Westig(DE)**

(72) Erfinder: **Hoffmann, Ferdinand
Auf dem Schilk 4
W-5870 Hemer(DE)**

(74) Vertreter: **Sperling, Rüdiger, Dipl.-Ing. et al
Patentanwälte Dipl.Ing.S. Staeger
Dipl.Ing.Dipl.Wirtsch.Ing. R Sperling Müllerstrasse 31
W-8000 München 5(DE)**

**Beschreibung**

Die Erfindung bezieht sich auf eine Klemmbrille zur Halterung von Pendelgleitlagern, insbesondere für Elektromotoren, mit einem das lichte Maß der Aufnahmeöffnung überschreitenden, von einem Bodenabschnitt in Einsteckrichtung ausgehenden in der Aufnahmeöffnung abgekröpfte Klemmrand und mit einem Winkel zur zum Bodenabschnitt parallelen Ebene entgegengesetzt zur Einsteckrichtung radial nach innen gerichteten Federlappen.

Eine derartige Klemmbrille ist zum Beispiel aus der DE-U-84 19 027.2 bekannt. Diese bekannte Klemmbrille besteht aus einem schalenförmigen Körper, dessen die Kalotte umgebende Bereiche in Einsteckrichtung aufgebogen sind. Dadurch daß die Federlaschen als nach innen gerichtete Verlängerungen des Bodenabschnittes ausgebildet sind, ist deren Biegsamkeit insofern begrenzt, als der Bodenabschnitt selbst praktisch unbiegsam ist und einen Teilabschnitt des radialen Abstandes zum Klemmrand einnimmt. Es liegt auf der Hand, daß bei derselben Größe und Form der bekannten Klemmbrillen der Durchmesser des Kalottenlagers nicht beträchtlich vergrößert werden kann, da sonst die Federlappen ihre Federwirkung praktisch verlieren oder überhaupt keine Federlappen mehr vorgesehen werden können.

Der Erfindung liegt die Aufgabe zugrunde, eine Klemmbrille zu schaffen, deren Federlappen eine erhöhte Federwirkung aufweisen und die auch für Pendelgleitlager mit einem kleineren Lagerschilddurchmesser eingesetzt werden kann.

Die Aufgabe wird dadurch gelöst, daß erfindungsgemäß die Federlappen dem Bodenabschnitt, der eine den unterschiedlichen Pendellagerdurchmessern angepaßte Ausnehmung aufweist, gegenüberliegen und vom Klemmrand aus radial nach innen verlaufen.

Es entstehen somit zwei Ebenen, nämlich eine die durch den Bodenabschnitt und den Klemmrand gebildet wird und eine zweite Ebene, in welcher die Federlappen liegen. Da die Federlappen vom Klemmrand ausgehen, sind sie bei gleichem Außendurchmesser wie bei der bekannten Klemmbrille wesentlich länger und üben eine bessere Federwirkung und Elastizität aus. Auch kann der Durchmesser des Lagerschildes wesentlich verkleinert werden, wobei immer noch wirksame Federlappen vorgesehen werden können.

Bevorzugterweise weisen die Federlappen am Klemmrand annähernd die gleiche Breite auf wie an ihren freien Enden. Im Bedarfsfall ist es natürlich möglich, auch die Federlappen so auszubilden, daß sie am Klemmrand breiter oder wesentlich breiter als an den freien Enden sind. Die Zahl der Federlappen ist nicht entscheidend, sie kann zwischen zwei und acht, unter Umständen auch mehr Federlappen je Klemmbrille variieren.

Zweckmäßigerweise verlaufen die Federlappen annähernd parallel zum Bodenabschnitt und sind an ihren freien Rändern in Einsteckrichtung aufgebogen.

Um die Federwirkung der Federlappen noch zu erhöhen, können sie an ihren Abbiegestellen am Klemmrand seitlich ein freies Spiel haben.

Auf der Zeichnung ist eine beispielsweise Ausführungsform der Erfindung dargestellt; sie wird nachfolgend näher erläutert; es zeigt:

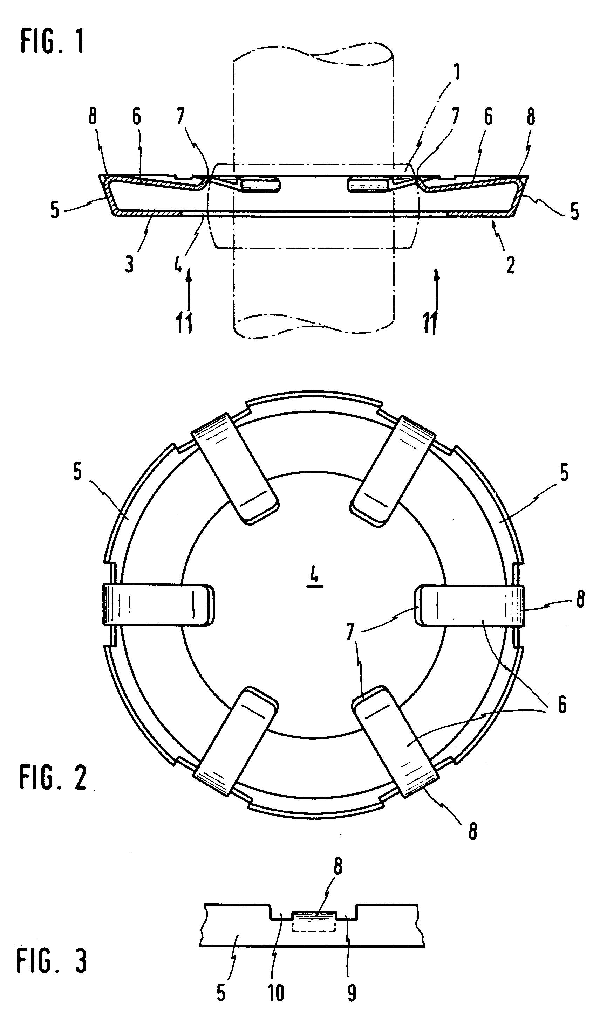

Fig. 1 einen Querschnitt durch eine Ausführungsform in vergrößertem Maßstab,

Fig. 2 eine Draufsicht auf die gleiche Ausführungsform und

Fig. 3 ein Detail der eben genannten Ausführungsform.

Eine ein Kalotten- bzw. Pendelgleitlager 1 umgebende Klemmbrille 2 weist einen Bodenabschnitt 3 mit einer den Wellendurchmesser überschreitenden runden Ausnehmung 4 auf.

Vom Bodenabschnitt 3 geht winklig ein Randabschnitt 5 ab; dieser Randabschnitt 5 bildet den sogen. Klemmrand; selbstverständlich kann der Winkel dieser Seitenwand spitzer sein.

Bei der dargestellten Ausführungsform sind sechs Federlappen 6 vorgesehen, die von der Oberkante der Seitenfläche bzw. des Klemmrandes 5 nach innen abgebogen sind; die Federlappen 6 verlaufen im wesentlichen parallel und im Abstand von bzw. zur Bodenfläche 3.

Die jeweiligen Federlappen 6 sind annähernd S-förmig abgebogen, so daß ihre freien Enden 7 in Einsteckrichtung 11 des Pendelgleitlagers 1 aufgebogen sind.

Es liegt auf der Hand, daß die Ausnehmung 4 auch einen grösseren Durchmesser aufweisen kann und daß die Federlappen 6 kürzer sein können, ohne im wesentlichen ihre Federwirkung zu verlieren. In diesem Fall kann das Pendelgleitlager einen größeren Durchmesser haben; die Klemmbrille muß jedoch stets den verschiedenen Lagerdurchmessern angepaßt werden.

An den jeweiligen Abbiegestellen 8 der Federlappen 6 im Bereich des Klemmrandes 5 ist letzterer beidseitig der Abbiegestellen mit einer kleinen Kerbe 9 bzw. 10 versehen, so daß die Beweglichkeit der Federlappen auch an der Abbiegestelle 8 nicht behindert wird.

Die Federlappen 6 weisen bei der dargestellten Ausführungsform vom Klemmrand 5 bis zu ihren freien Enden 7 hin die gleiche Breite und die gleiche Stärke auf.

Die Klemmbrille wird gewöhnlich aus Federstahl oder anderen federnden Materialien ausgestanzt und maschinell an der gewünschten Stelle eingebaut. Die sich etwa beim Einklemmen der Klemmbrille ergebenden "Verwerfungen" oder Verstauchungen spielen, sofern diese "Fehler" nur geringfügig sind, für die Wirksamkeit der Klemmbrille im eingebauten Zustand keine Rolle, was auf die Tatsache zurückzuführen ist, daß die Federlappen praktisch eine gesonderte Federebene bilden. Die Zahl und die Breite der Federlappen richten sich u.a. nach der Größe der Kalotte bzw. des Lagerschildes und der gewünschten Federwirkung bzw. Elastizität.

**Patentansprüche**

1. Klemmbrille (2) zur Halterung von Pendelgleitlagern (1), insbesondere für Elektromotoren, mit einem das lichte Maß der Aufnahmeöffnung überschreitenden, von einem Bodenabschnitt (3) in Einsteckrichtung ausgehenden in die Aufnahmeöffnung abgekröpfte Klemmrand (5) und mit einem Winkel zur zum Bodenabschnitt (3) parallelen Ebene entgegengesetzt zur Einsteckrictung (11) radial nach innen gerichteten Federlappen (6); dadurch **gekennzeichnet,** daß die Federlappen (6) dem Bodenabschnitt (3), der eine den unterschiedlichen Pendellagerdurchmessern angepaßte Ausnehmung (4) aufweist, gegenüberliegen und vom Klemmrand (5) aus radial nach innen verlaufen.

2. Klemmbrille nach Anspruch 1, dadurch gekennzeichnet, daß die Federlappen (6) am Klemmrand (5) annähernd die gleiche Breite aufweisen wie an ihren freien Enden (7).

3. Klemmbrille nach Anspruch 1 oder 2, dadurch gekennzeichnet, daß die Federlappen (6) annähernd parallel zum Bodenabschnitt (5) verlaufen und an ihren freien Enden (7) in Einsteckrichtung (11) aufgebogen sind.

4. Klemmbrille nach einem der Ansprüche 1 bis 3, dadurch gekennzeichnet, daß die Federlappen (6) an ihren Abbiegestellen (8) am Klemmrand (5) seitlich freies Spiel haben.

**Claims**

1. Retainer cup (2) for a self-aligning plain bearing (1), in particular for electric motors, with a retaining ring (5) which is of greater dimension than the internal dimension of the receiving opening and which extends in the insertion direction (11) from a base portion (3), and with inwardly directed, radial resilient members (6) which are bent into the receiving opening in a plane parallel to the base portion (3), characterised in that the resilient members (6) face the base portion (3), which is provided with an opening (4) corresponding to a bearing diameter, and extend radially inwards from the retaining ring (5).

2. Retainer cup according to Claim 1, characterised in that the resilient members (6) have substantially the same width at the retaining ring (5) as at their free ends (7).

3. Retainer cup according to Claim 1 or 2, characterised in that the resilient members (6) are arranged substantially parallel to the base portion (3) and are bent at their free ends (7) in the insertion direction (11).

4. Retainer cup according to one of Claims 1 to 3, characterised in that the resilient members (6) have a degree of lateral free play at the points (8) on the retaining ring (5) at which they are bent.

**Revendications**

1. Lunette de serrage (2) pour la fixation de paliers lisses oscillants (1), en particulier d'électromoteurs, comportant un bord de serrage (5) dépassant les dimensions intérieures de l'orifice de réception, partant d'une section de base (3) dans la direction d'emboîtement et coudé dans l'orifice de réception, et comportant des languettes élastiques (6) opposées de façon angulaire par rapport au plan parallèle à la section de base (3) et orientées radialement vers l'intérieur par rapport à la direction d'emboîtement (11), caractérisée en ce que les languettes élastiques (6) sont situées en face de la section de base (3) qui présente un évidement (4) adapté aux différents diamètres des paliers oscillants, et sont orientées radialement vers l'intérieur en partant du bord de serrage (5).

2. Lunette de serrage selon la revendication 1, caractérisée en ce que les languettes élastiques (6) présentent sur le bord de serrage (5) à peu près la même largeur qu'à leur extrémité libre (7).

3. Lunette de serrage selon la revendication 1 ou 2, caractérisée en ce que les languettes élastiques (6) sont orientées à peu près parallèlement à la section de base (3) et sont recourbées dans la direction d'emboîtement (11) au niveau de leur extrémité libre (7).

4. Lunette de serrage selon l'une des revendications 1 à 3, caractérisée en ce que les languettes élastiques (6) ont un jeu latéral à leur point de courbure (8) sur le bord de serrage (5).

FIG. 1

FIG. 2

FIG. 3